# EUROPÄISCHE PATENTANMELDUNG

(11) **EP 2 551 564 A1**
(43) Veröffentlichungstag der Anmeldung: **30.01.2013**
(21) Anmeldenummer: 11175698.7
(22) Anmeldetag: 28.07.2011
(51) Int. Cl.: F16K 3/10, F16K 51/02

(54) **Ventil zum im Wesentlichen gasdichten Unterbrechen eines Fliesswegs**

(71) Anmelder: VAT Holding AG, 9469 Haag (CH)
(72) Erfinder: Lamprecht, Michael, 6841 Mäder (AT); Weiss, Wolfgang, 6971 Hard (AT)
(74) Vertreter: Harmann, Bernd-Günther

(57) **Zusammenfassung**

Die Erfindung betrifft ein Ventil zum gasdichten Unterbrechen eines Fliesswegs (F). In einem Ventilgehäuse (1) ist eine erste Öffnung (3) mit einer geometrischen Öffnungsachse (4) und einen Ventilsitz (5) angeordnet. Ein Ventilteller (8) besitzt einen äusseren Tellerabschnitt (9) und einen inneren Tellerabschnitt (11), der relativ zum äusseren Tellerabschnitt (9) linear bewegbar ist, so dass in einer Geschlossenstellung (C) eine Druckdifferenz am Ventilteller (8) im Wesentlichen auf den bewegbaren innere Tellerabschnitt (11) wirkt und sich der innere Tellerabschnitt (11) auf das Ventilgehäuse (1) abstützt. Erfindungsgemäss weist der Ventilsitz (5) eine radial nach innen weisende erste Innenfläche (14) und der äussere Tellerabschnitt (9) eine radial nach aussen weisende erste Aussenfläche (15) auf, die derart angeordnet und ausgebildet ist, dass in der Geschlossenstellung (C) ein radial dichtender Kontakt mit der ersten Innenfläche (14) besteht. Der äussere Tellerabschnitt (9) weist eine radial nach innen weisende zweite Innenfläche (16) und der innere Tellerabschnitt (11) eine radial nach aussen weisende zweite Aussenfläche (17) auf, die derart angeordnet und ausgebildet ist, dass ein radial dichtender Kontakt mit der zweiten Innenfläche (16) besteht.

## Beschreibung

Die Erfindung betrifft ein Ventil zum im Wesentlichen gasdichten Unterbrechen eines Fliesswegs gemäss dem Oberbegriff des Anspruchs 1. Derartige Ventile, insbesondere in Form von Pendelventilen bzw. Schieberventilen, werden vor allem in der Vakuumtechnik verwendet.

Ein Ventil gemäss dem Oberbegriff des Anspruch 1 ist aus der US 2007/0138424 (Geiser) bekannt, welche als nächstliegender Stand der Technik betrachtet wird.

Ventile der eingangs genannten Art sind in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzt, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden und die Öffnung im Wesentlichen gasdicht verschlossen wird. Diese zweite Bewegung erfolgt vorzugsweise im Wesentlichen in eine senkrechte Richtung zum Ventilsitz. Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Aus dem Stand der Technik sind unterschiedliche Antriebssysteme zur Erzielung diese Kombination einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Aus der US 6,561,483 (Nakagawa) und der US 6,561,484 (Nakagawa et al.) sind Vakuumventile in unterschiedlichen Ausführungsformen bekannt, die einen zweigeteilten Ventilteller umfassen. Ein erster Tellerabschnitt, der eine axiale Dichtung trägt, besitzt eine Öffnung. Ein zweiter Tellerabschnitt ist mittels eines dehnbaren Körpers mit dem ersten Tellerabschnitt verbunden. Ein Aktor ist zwischen dem ersten und dem zweiten Tellerabschnitt angeordnet, sodass die beiden Tellerabschnitte aktiv aufeinander zu und voneinander weg bewegt werden können. Der dehnbare Körper ist als ein Faltenbalg ausgebildet. Der erste Tellerabschnitt ist mittels des Aktors gegen den Ventilsitz anpressbar, so dass eine axial dichtender Kontakt entsteht, wobei sich der zweite Tellerabschnitt - insbesondere im Falle eines ventilsitzseitigen Überdrucks - gegebenenfalls auf einer gegenüberliegenden Ventilgehäuseseite abstützt. Der Aufbau der beschriebenen Vakuumventile ist vor allem aufgrund der Vielzahl an Bauteilen und der Notwendigkeit des Verwendens eines Faltenbalgs zur Abdichtung des ersten Tellerabschnitts zum zweiten Tellerabschnitt sowie zum Teil eines gesonderten Antriebs innerhalb des Faltenbalgs verhältnismässig komplex. Zudem sind die beschriebenen Ventile ungünstig zu warten und anfällig für Verschmutzungen. Die axiale Dichtung ist ausserdem nicht vollständig von am Ventil anliegenden Differenzdruckkräften befreit, so dass die axiale Anpresskraft gewissen Schwankungen unterliegt, wodurch der Verschleiss der axialen Dichtung erhöht wird bzw. Undichtigkeiten insbesondere bei zu geringem Anpressdruck der axialen Dichtung entstehen können.

Ein weiterer Nachteil derartiger Ventile mit einem aktiv verstellbaren Ventilring ist der relativ komplizierte und bauraumintensive Aufbau des Ventils, die Notwendigkeit einer komplexen Steuerung der Anpresskräfte und das Vorhandensein mehrerer bewegter Teile im Flusskanal, die eine Wartung und Reinigung des Ventils erschweren.

Vor allem aufgrund des Einsatzgebietes von Pendel- und Schieberventilen zwischen Prozesskammern und Vakuumpumpen in langen Fertigungsanlagen wird ein möglichst flacher Aufbau des Ventils in Bezug auf den Abstand von Öffnung zu Öffnung gefordert, beispielsweise um die Transportwege der Teile bzw. Gase und das innere Gasgesamtvolumen gering zu halten und die einzelnen Komponenten der Fertigungsanlage möglichst dicht anzuordnen und somit einen kompakten Aufbau der Fertigungsanlagen zu ermöglichen. Besonders Ventile mit aktiv verstellbarem Ventilring oder Ventiltellerabschnitten erfüllen diese Anforderung für zahlreiche Anwendungen nur ungenügend.

Aus der US 2007/0138424 (Geiser) und der US 2007/0138425 (Geiser) ist ein Ventil, insbesondere ein Pendel- oder Schieberventil, zum im Wesentlichen gasdichten Unterbrechen eines Fliesswegs bekannt. Das Ventil umfasst ein Ventilgehäuse mit einer ersten Wand, die eine erste Öffnung und einen ersten Ventilsitz aufweist, einen Ventilteller mit einer Verschlussseite mit einem Abdichtring und mindestens einen Antrieb. Mittels des Antriebs ist der Ventilteller von einer geöffneten Position im Wesentlichen parallel zum ersten Ventilsitz schwenkbar oder verschiebbar und der senkrechte Abstand zwischen dem Ventilteller und dem ersten Ventilsitz derart verringerbar, dass durch einen axial dichtenden Kontakt zwischen dem Abdichtring und dem ersten Ventilsitz der Fliessweg in der geschlossenen Position im Wesentlichen gasdicht unterbrochen ist. Der Ventilteller umfasst einen äusseren Tellerabschnitt, auf dessen Rückseite eine sternförmige Verstrebung angeordnet ist, die den äusseren Tellerabschnitt mit einem Arm, der mit einem Antrieb verbunden ist, in einem zentrischen, nahe der Mittelachse der ersten Öffnung liegenden Bereich verbindet. Der Ventilteller fixiert den Abdichtring in senkrechter Richtung zum ersten Ventilsitz. Weiters besitzt der Ventilteller einen inneren Tellerabschnitt mit einer Aussenumfangsfläche. Der innere Tellerabschnitt ist relativ zum äusseren Tellerabschnitt in einer zum ersten Ventilsitz im Wesentlichen senkrechten Richtung bewegbar gelagert. Die Aussenumfangsfläche ist von dem Abdichtring im Wesentlichen gasdicht innendichtend umschlossen. Somit erfüllt der Abdichtring zwei Dichtfunktionen. Zum einen dichtet er in radialer Richtung die Verbindung zwischen dem inneren und dem äusseren Tellerabschnitt ab, zum anderen dichtet er in der geschlossenen Position des Ventils in axialer Richtung den äusseren Tellerabschnitt zum Ventilsitz ab. Hierdurch wirkt in der geschlossenen Position eine Druckdifferenz am Ventilteller im Wesentlichen auf den inneren Tellerabschnitt, so dass sich der innere Tellerabschnitt senkrecht entkoppelt von dem äusseren Tellerabschnitt auf einen Abschnitt des Ventilgehäuses, insbesondere den ersten Ventilsitz oder eine seitliche Nut, abstützt. Ein Vorteil dieses Ventils besteht in der Verwendung nur einer einzigen Dichtung, welche eine Doppelfunktion als axiale und radiale Dichtung hat. Ein Nachteil besteht in dem verhältnismässig komplexen Aufbau des Ventils und der Notwendigkeit einer bestimmten axialen Anpresskraft der Dichtung auf den Ventilsitz zur Gewährleistung der axialen Dichtung, weshalb der äussere Tellerabschnitt mittels der rückseitigen Verstrebung, die zur Vermeidung einer Kippung zentrisch mit dem Arm verbunden ist, verhältnismässig robust aufgebaut sein muss.

Es ist daher Aufgabe der Erfindung, die oben beschriebenen Probleme zu lösen und ein möglichst einfach und kompakt aufgebautes Ventil der eingangs genannten Art, das auch beidseitig wirkenden hohen Druckbelastungen standzuhalten vermag und sich durch einen geringen Dichtungsverschleiss, selbst bei hohen Differenzdrücken und Druckschwankungen auszeichnet, zur Verfügung zu stellen.

Diese Aufgabe wird durch die Verwirklichung der kennzeichnenden Merkmale des unabhängigen Patentanspruchs gelöst. Merkmale, die die Erfindung in alternativer oder vorteilhafter Weise weiterbilden, sind den abhängigen Patentansprüchen zu entnehmen.

Die Erfindung beruht darauf, einen zumindest zweiteiligen Ventilteller mit einem äusseren Tellerabschnitt und einen inneren Tellerabschnitt vorzusehen und beide Tellerabschnitte radial dichtend auszugestalten. Der äussere Tellerabschnitt ist über eine radial wirkende Hauptdichtung gasdicht mit dem Ventilsitz des Ventilgehäuses in Kontakt bringbar ist. Eine derartige radiale Dichtung hat zwar axial im Wesentlichen keine abstützende Wirkung, so dass ein anderes Element die axiale Abstützung übernehmen muss, jedoch wirken axiale Kräfte somit nicht auf die Dichtung, wodurch die Dichtung geschont wird. Ein innerhalb des äusseren Tellerabschnitts angeordneter innerer Tellerabschnitt ist relativ zum äusseren Tellerabschnitt auf dichtende - insbesondere gasdichtende - Weise axial beweglich gelagert, wobei zwischen den Tellerabschnitten eine radial wirkende Zusatzdichtung vorgesehen ist. In der Geschlossenstellung des Ventils wirkt eine Druckdifferenz am Ventilteller im Wesentlichen auf den beweglichen innere Tellerabschnitt und der innere Tellerabschnitt stützt sich im Wesentlichen entkoppelt von dem äusseren Tellerabschnitt direkt oder indirekt auf das Ventilgehäuse ab. Durch den Einsatz zweier radialer Dichtungen, die senkrecht zur wirkenden Differenzdruckkraft radial dichten, bleiben beide radialen Dichtungen vom herrschenden Differenzdruck unbelastet, wodurch die Lebensdauer der Dichtungen erhöht wird. Ausserdem wirkt weder der herrschende Differenzdruck, noch ein Anpressdruck auf den Antrieb des Ventiltellers, so dass weder der Antrieb, noch die Verbindung zwischen dem Antrieb und dem äusseren Tellerabschnitt hohen Kräften ausgesetzt ist. Dies ermöglicht einen kompakten und einfachen Aufbau des Ventils mit verhältnismässig wenigen Bauteilen.

Das erfindungsgemässe Ventil zum im Wesentlichen gasdichten Unterbrechen eines Fliesswegs umfasst ein Ventilgehäuse mit einer ersten Wand, die eine erste Öffnung für den Fliessweg aufweist. Die erste Öffnung hat eine geometrische Öffnungsachse und einen Ventilsitz, der die erste Öffnung umschliesst. In anderen Worten umgibt der Ventilsitz die erste Öffnung. Die erste Öffnung und der Ventilsitz befinden sich auf einer ersten Seite des Ventilgehäuses. Beispielsweise ist die erste Seite diejenige Seite, auf welcher eine Vakuumpumpe zum Evakuieren einer Vakuumkammer angeschlossen ist, während die zweite Seite des Ventilgehäuses zur Vakuumkammer führt. Selbstverständlich sind auch andere Anwendungen oder Anordnungen möglich. Die erste Öffnung hat beispielsweise einen kreisförmigen oder ovalen Querschnitt oder einen rechteckigen Querschnitt mit abgerundeten Ecken. Die geometrische Öffnungsachse ist insbesondere die Mittelachse der ersten Öffnung und wird beispielsweise durch den Längsverlauf der Öffnung, durch den Verlauf eines an der Öffnung angeordneten Anschlusses, durch die Verbindungslinie mit einer allfälligen zweiten Öffnung des Ventilgehäuses oder durch die Fläche des Ventilsitzes definiert. Unter einem Ventilsitz ist allgemein funktional ein als Dichtfläche wirkender Abschnitt in der ersten Wand zu verstehen, auf dem eine weitere als Dichtfläche wirkende Fläche aufsetzen kann. Das Ventilgehäuse kann auch alleine von der Wand gebildet werden. Der Fliessweg ist der reguläre, sperrbare Strömungsweg eines gasförmigen oder flüssigen Mediums durch die erste Öffnung, gegebenenfalls eine zweite Öffnung und das Ventil.

Ausserdem umfasst das Ventil einen Ventilteller, mittels welchem die erste Öffnung verschlossen und wieder geöffnet werden kann. Der Ventilteller besitzt beispielsweise einen runden, ovalen oder rechteckigen Querschnitt. Die Abmessung des Ventiltellers ermöglicht ein Verschliessen der ersten Öffnung durch Überlappen und Aufsetzen auf die erste Öffnung und deren Ventilsitz. Der Ventilteller ist mindestens zweiteilig ausgebildet und gliedert sich in zwei innerhalb eines Bewegungsbereichs axial relativ zueinander beweglichen Komponenten, nämlich einen äusseren Tellerabschnitt und einen inneren Tellerabschnitt.

Wenn im Rahmen der Erfindung von radialen und axialen Richtungen und Dichtwirkungen die Rede ist, bezieht sich dies allgemein auf Richtungen im Wesentlichen senkrecht oder quer zur geometrischen Öffnungsachse bzw. im Wesentlichen parallel zur Öffnungsachse. Somit sind alle Richtungen bzw. Geraden, welche im Wesentlichen auf einer Ebene, zu welcher die Öffnungsachse eine geometrische Normale bildet, liegen, als radiale Richtungen bzw. Geraden zu verstehen, selbst wenn sie nicht direkt auf die oder weg von der Öffnungsachse weisen bzw. die Öffnungsachse schneiden, sondern beispielsweise windschief zu dieser verlaufen. Hingegen sind alle Richtungen bzw. Geraden, welche im Wesentlichen parallel zu der Öffnungsachse verlaufen, als axiale Richtungen bzw. Geraden zu verstehen. Somit bezieht sich der Begriff "radial" nicht nur auf einen kreisförmigen Querschnitt der Öffnung oder des Ventiltellers einschliesslich der jeweiligen Abschnitte, sondern auch auf andere, beispielsweise rechteckige Querschnitte. In letzterem Fall ist unter radial beispielsweise eine Richtung von innen nach aussen, und umgekehrt, senkrecht bzw. quer zur Öffnungsachse und unter axial jede Richtung im Wesentlichen parallel zur Öffnungsachse zu verstehen. Bei beweglichen Komponenten, insbesondere dem Ventilteller, beziehen sich die axiale und radiale Richtung auf einen geschlossenen Zustand des Ventils.

Der äussere Tellerabschnitt ist insbesondere ring- oder rahmenartig ausgebildet und umschliesst oder umgibt den inneren Tellerabschnitt, der geschlossen ausgebildet ist. Unter einem geschlossenen Tellerabschnitt ist zu verstehen, dass der innere Tellerabschnitt gegebenenfalls gemeinsam mit anderen Komponenten eine geschossene Fläche bildet, so dass der innere Tellerabschnitt gemeinsam mit dem ihn umgebenen äusseren Tellerabschnitt eine Verschlussfläche bildet, mittels welcher die erste Öffnung vollständig überdeckt und verschlossen werden kann.

Der innere Tellerabschnitt ist innerhalb des äusseren Tellerabschnitts in Richtung parallel zur Öffnungsachse relativ zum äusseren Tellerabschnitt zwischen einer eingefahrenen Stellung und einer ausgefahrenen Stellung linear bewegbar auf dichte, insbesondere gasdichte Weise gelagert. In anderen Worten kann der inneres Tellerabschnitt relativ zum äusseren Tellerabschnitt zwischen der eingefahrenen und der ausgefahren Stellung frei bewegt werden, wobei in und zwischen diesen Stellungen eine gasdichte Verbindung zwischen dem inneren und äusseren Tellerabschnitt besteht. Wiederum in anderen Worten ist der innere Tellerabschnitt innerhalb eines bestimmten Bewegungsbereichs in Richtung der Öffnungsachse vom äusseren Tellerabschnitt entkoppelt. Unter der eingefahrenen Stellung ist allgemein eine erste Stellung des inneren Tellerabschnitts relativ zum äusseren Tellerabschnitt zu verstehen, während unter der ausgefahrenen Stellung eine zweite solche Relativstellung zu verstehen ist. Vorzugsweise ist die eingefahrene Stellung diejenige Stellung, in welcher der innere Tellerabschnitt in seiner axialen Erstreckung weitgehend von dem äusseren Tellerabschnitt rings herum umschlossen wird, während der innere Tellerabschnitt in der ausgefahrenen Stellung in seiner axialen Erstreckung nur teilweise von dem äusseren Tellerabschnitt umschlossen wird.

Der äussere Tellerabschnitt hat eine radial nach innen weisende und parallel zur Öffnungsachse verlaufende zweite Innenfläche. Der innere Tellerabschnitt hat eine mit der zweiten Innenfläche des äusseren Tellerabschnitts korrespondierende, radial nach aussen weisende und parallel zur Öffnungsachse verlaufende zweite Aussenfläche. Diese zweite Aussenfläche und diese zweite Innenfläche sind derart angeordnet und ausgebildet, dass über eine dazwischen liegende zweite Dichtung ein radial dichtender Kontakt zwischen der zweiten Innenfläche des äusseren Tellerabschnitts und der zweiten Aussenfläche des inneren Tellerabschnitts besteht. Dieser radial dichtende Kontakt ist innerhalb des Bereichs zwischen der eingefahrenen Stellung und der ausgefahrenen Stellung gewährleistet. Wenn allgemein von einem Bereich zwischen zwei Stellungen die Rede ist, so sind auch diese beiden Stellungen allgemein mit eingeschlossen.

Die radial dichtende zweite Dichtung zwischen den Tellerabschnitten ist insbesondere als O-Ring oder aufvulkanisierte Dichtung ausgebildet. Diese zweite Dichtung kann entweder auf der zweiten Innenfläche des äusseren Tellerabschnitts zum Herstellen des radial aussendichtenden Kontakts mit der zweiten Aussenfläche des inneren Tellerabschnitts angeordnet sein, oder sie befindet sich auf der zweiten Aussenfläche des inneren Tellerabschnitts zum Herstellen des radial innendichtenden Kontakts mit der zweiten Innenfläche des äusseren Tellerabschnitts. Es ist jedoch auch möglich, dass diese Dichtung rein funktionell besteht und von einer dichtenden Führung der zweiten Aussenfläche in der zweiten Innenfläche gebildet wird.

Die zweite Dichtung ist derart ausgebildet und angeordnet, dass der innere Tellerabschnitt bei Nicht-Einwirkung externer Kräfte, insbesondere ohne Einwirken eines Differenzdrucks am Ventil, abhängig von der Montagestellung des Ventils abgesehen von der Schwerkraft, in seiner jeweiligen axialen Stellung zwischen der eingefahrenen und ausgefahrenen Stellung innerhalb des äusseren Tellerabschnitts gehalten wird. In anderen Worten ist die zweite Dichtung derart, dass sich der innere Tellerabschnitt nicht ohne mechanische oder Druckeinwirkung von aussen verstellt.

Ausserdem umfasst das Ventil mindestens einen Antrieb, der mit dem äusseren Tellerabschnitt verbunden ist und mittels welchen dieser äussere Tellerabschnitt und somit auch indirekt der innere Tellerabschnitt sowohl durch eine Querbewegung, als auch durch eine Längsbewegung verstellt werden kann. Unter einer Querbewegung ist allgemein eine Bewegung im Wesentlichen senkrecht bzw. quer zur Öffnungsachse, also im Wesentlichen innerhalb einer Ebene, zu welcher die Öffnungsachse eine geometrische Normale bildet, zu verstehen, während die Längsbewegung eine Bewegung im Wesentlichen parallel zu der Öffnungsachse ist.

Der Antrieb ist zum einen derart ausgebildet, dass der Ventilteller zwischen einer Offenstellung und einer Zwischenstellung mittels der im Wesentlichen quer zur Öffnungsachse erfolgenden Querbewegung schwenkbar oder verschiebbar ist. Diese Bewegung kann also eine Schwenkbewegung, insbesondere auf einer Kreisbahn, eine Linearbewegung oder eine sonstige Bewegung im Wesentlichen quer zur Öffnungsachse sein. In der Offenstellung ist der Ventilteller in einem seitlich neben der ersten Öffnung angeordneten Verweilabschnitt positioniert und gibt die erste Öffnung und den Fliessweg frei. Dieser Verweilabschnitt kann ein entsprechender Abschnitt innerhalb des Ventilgehäuses, insbesondere ein Parkabschnitt für den Ventilteller, oder ein sonstiger abstrakter Abschnitt sein. In der Zwischenstellung ist der Ventilteller über der ersten Öffnung positioniert und überdeckt den Öffnungsquerschnitt der ersten Öffnung, wobei sich der Ventilteller in beabstandeter Gegenüberlage zum Ventilsitz befindet. In anderen Worten besteht in der Zwischenstellung in Richtung der Öffnungsachse ein Abstand zwischen dem Ventilteller und dem Ventilsitz. Somit wird die erste Öffnung in der Zwischenstellung vom Ventilteller zwar überdeckt, aber nicht gasdicht verschlossen.

Zum anderen ist der Antrieb derart ausgebildet, dass der Ventilteller zwischen der Zwischenstellung und einer Geschlossenstellung mittels der parallel zur Öffnungsachse erfolgenden Längsbewegung verschiebbar ist. In der Geschlossenstellung besteht ein die erste Öffnung dicht, insbesondere gasdicht schliessender und den Fliessweg unterbrechender dichter Kontakt zwischen dem äusseren Tellerabschnitt und dem Ventilsitz. In anderen Worten ist der senkrechte Abstand zwischen dem Ventilteller und dem Ventilsitz in der Geschlossenstellung derart reduziert, dass zwischen dem äusseren Tellerabschnitt und dem Ventilsitz ein dichter Kontakt besteht und die erste Öffnung aufgrund der dichten Verbindung zwischen dem äusseren Tellerabschnitt und dem flächig geschlossenen inneren Tellerabschnitt vollständig dicht verschlossen wird. In der Geschlossenstellung wirkt eine Druckdifferenz am Ventilteller somit im Wesentlichen auf den bewegbaren inneren Tellerabschnitt. Aufgrund der freien Beweglichkeit des inneren Tellerabschnitts wird dieser bei Herrschen einer Druckdifferenz verschoben. Das Ventil und der Ventilteller sind derart ausgebildet, dass sich der innere Tellerabschnitt in Richtung parallel zur Öffnungsachse im Wesentlichen entkoppelt von dem äusseren Tellerabschnitt direkt oder indirekt auf das Ventilgehäuse abstützt. Somit wirkt die Differenzdruckkraft über den inneren Tellerabschnitt im Wesentlichen auf das Ventilgehäuse und der äussere Tellerabschnitt sowie der Antrieb bleiben im Wesentlichen von der Differenzdruckkraft unbelastet.

Die Erfindung sieht weiters vor, dass der Ventilsitz eine radial nach innen weisende und parallel zur Öffnungsachse verlaufende erste Innenfläche aufweist. Der äussere Tellerabschnitt hat eine radial nach aussen weisende und parallel zur Öffnungsachse verlaufende erste Aussenfläche. Diese erste Aussenfläche und diese erste Innenfläche sind derart angeordnet und ausgebildet, dass in der Geschlossenstellung über eine dazwischen liegende erste Dichtung ein radial dichtender Kontakt zwischen der ersten Innenfläche und der ersten Aussenfläche besteht. Durch diesen radial dichtenden Kontakt zwischen dem äusseren Tellerabschnitt und dem Ventilsitz erfolgt das gasdichte Schliessen lediglich durch Verschieben des äusseren Tellerabschnitts mit dessen ersten Aussenfläche in den Bereich innerhalb der ersten Innenfläche des Ventilsitzes, so dass die erste Innenfläche des Ventilsitzes die erste Aussenfläche des äusseren Tellerabschnitts umschliesst und die dazwischen liegende erste Dichtung die gasdichte Verbindung bewirkt. Der gasdichte Kontakt bleibt somit gewährleistet, solange sich die erste Aussenfläche des äusseren Tellerabschnitts innerhalb der ersten Innenfläche des Ventilsitzes mit dazwischen liegender erster Dichtung befindet, wobei eine geringfügige relative axiale Verschiebung die gasdichte Verbindung zwischen dem äusseren Tellerabschnitt und dem Ventilsitz nicht beeinträchtigt. Die erste Dichtung kann auch funktional von einer entsprechend dichten Führung der ersten Aussenfläche in der ersten Innenfläche gebildet werden.

Da auf den äusseren Tellerabschnitt weder wesentliche Differenzdruckkräfte wirken, noch eine hoher Anpressdruck auf den Ventilsitz aufrechterhalten werden muss, müssen der Antrieb und die Halterung des Ventiltellers keine grossen Kräfte aufnehmen und können entsprechend dimensioniert werden. Insbesondere kann der äussere Tellerabschnitt mit dem mindestens einen Antrieb über einen derart seitlich an dem äusseren Tellerabschnitt angeordneten, sich senkrecht zur Öffnungsachse erstreckenden Arm verbunden sein, dass sich der Arm in der Geschlossenstellung ausserhalb des entlang der Öffnungsachse geometrisch projizierten Öffnungsquerschnitts der ersten Öffnung befindet. In anderen Worten kann auf eine rückseitig am Ventilteller angeordnete, insbesondere sternförmige Verstrebung, die den äusseren Tellerabschnitt mit dem Antrieb in einem zentrischen, nahe der Mittelachse der ersten Öffnung liegenden Bereich verbindet, wie es der Stand der Technik erfordert, verzichtet werden, da keine grossen Kräfte vom Antriebsarm aufgenommen werden müssen. Die Erfindung sieht vor, dass der Antriebsarm lediglich seitlich am äusseren Tellerabschnitt angeordnet ist.

Vorzugsweise ist die erste Dichtung auf der ersten Aussenfläche des äusseren Tellerabschnitts zum Herstellen des radial dichtenden Kontakts mit der ersten Innenfläche des Ventilsitzes fixiert. Dies hat den Vorteil, dass sich die erste Dichtung bei vollständig geöffnetem Ventil ausserhalb des Fliessbereichs befindet und somit weitgehend vor Verunreinigungen, welche durch das Medium entstehen, die das Ventil durchströmen, geschützt ist. Alternativ besteht jedoch auch die Möglichkeit, dass die erste Dichtung auf der ersten Innenfläche des Ventilsitzes zum Herstellen des radial dichtenden Kontakts mit der ersten Aussenfläche des äusseren Tellerabschnitts fixiert ist. Ausserdem ist es möglich, dass die erste Dichtung auf beiden Abschnitten angeordnet ist. Die erste Dichtung wird insbesondere von einem O-Ring, welcher beispielsweise in einer Nut gehalten wird, oder einer aufvulkanisierten Dichtung gebildet.

Der äussere Tellerabschnitt ist in einer Weiterbildung der Erfindung ringförmig ausgebildet, wobei der innere Tellerabschnitt die Form einer geschlossenen Kreisscheibe hat, insbesondere mit seitlichen Flanken in Form einer Zylindermantelfläche, auf welcher die zweite Aussenfläche angeordnet ist. Vorzugsweise sind bei dieser oder einer allgemeinen Ausführungsform die erste Innenfläche und die erste Aussenfläche, und/oder die zweite Innenfläche und die zweite Aussenfläche geometrische Kreiszylindermantelflächen. Alternativ besteht die Möglichkeit, dass es sich um allgemeine, parallel zu der Öffnungsachse erstreckende Zylindermantelflächen handelt, wobei die Grundlinie anstelle einer Kreisform auch eine ovale, polygonale oder sonstige Form haben kann. Insbesondere ist das Ventil ein Pendelventil, wobei der Antrieb vorzugsweise derart ausgebildet ist, dass der Ventilteller mittels der Querbewegung im Wesentlichen parallel über den Querschnitt der ersten Öffnung und senkrecht zur Öffnungsachse schwenkbar ist. Es ist jedoch auch möglich, dass das Ventil ein Schieberventil bzw. ein Transferventil z.B. des L-Typs ist.

Wie dargestellt wirkt in der Geschlossenstellung eine Druckdifferenz am Ventilteller im Wesentlichen auf den bewegbaren inneren Tellerabschnitt, wobei sich der innere Tellerabschnitt in Richtung parallel zur Öffnungsachse im Wesentlichen entkoppelt von dem äusseren Tellerabschnitt direkt oder indirekt auf das Ventilgehäuse abstützt. In einer Weiterbildung der Erfindung stützt sich der innere Tellerabschnitt indirekt über den äusseren Tellerabschnitt in einer Richtung auf das Ventilgehäuse auf. Vorzugsweise ist hierzu auf der ersten Wand eine insbesondere die erste Öffnung umschliessende erste Auflagefläche ausgeformt. Diese erste Auflagefläche und der äussere Tellerabschnitt sind derart angeordnet und ausgebildet, dass in der Geschlossenstellung des Ventiltellers der äussere Tellerabschnitt auf der ersten Auflagefläche aufliegt. Hierzu ist auf dem äusseren Tellerabschnitt eine erste Fläche vorgesehen, welche in der Zwischenstellung der ersten Auflagefläche beabstandet gegenüberliegt und in der Geschlossenstellung auf der ersten Auflagefläche in Richtung zur ersten Seite aufliegt. Die erste Auflagefläche der ersten Wand und die erste Fläche des äusseren Tellerabschnitts haben zueinander korrespondierende Formen, insbesondere haben sie jeweils eine Ringform. In einer Weiterbildung ist die erste Auflagefläche als ein an die erste Innenfläche des Ventilsitzes angrenzender, im Wesentlichen senkrecht zur Öffnungsachse verlaufender Absatz in der ersten Öffnung ausgebildet. Diese erste Auflagefläche dient einerseits als Wegbegrenzung für den Antrieb, um den äusseren Tellerabschnitt in eine definierte Geschlossenstellung zu bringen, zum anderen kann sie zusätzlich als indirekte Abstützfläche für den inneren Tellerabschnitt dienen.

Eine Weiterbildung der Erfindung sieht vor, dass ein Anschlag zwischen dem äusseren Tellerabschnitt und dem inneren Tellerabschnitt zur Begrenzung der relativen linearen Beweglichkeit des inneren Tellerabschnitts in Richtung zur ersten Seite und zur ersten Öffnung vorgesehen ist. Dieser Anschlag ist derart angeordnet, dass in der Geschlossenstellung der innere Tellerabschnitt bei auf der ersten Seite der ersten Öffnung herrschendem relativem Unterdruck in der eingefahrenen Stellung auf dem äusseren Tellerabschnitt aufliegt. Beispielsweise ist der Anschlag als eine sich radial von der zweiten Aussenfläche nach aussen erstreckende Schulter des inneren Tellerabschnitts ausgebildet. Somit ist es möglich, dass sich bei relativem Unterdruck auf der ersten Öffnungsseite der innere Tellerabschnitt über den Anschlag auf dem äusseren Tellerabschnitt und sich dieser wiederum über dessen erste Fläche auf der ersten Auflagefläche abstützt. Der Antrieb, der Antriebsarm und die beiden Dichtungen bleiben hierbei im Wesentlichen unbelastet.

Gemäss einer erfindungsgemässen Weiterbildung weist das Ventilgehäuse auf einer der ersten Seite beabstandet gegenüberliegenden zweiten Seite eine zweite Wand auf. In dieser zweiten Wand ist in beabstandeter, im Wesentlichen paralleler Gegenüberlage zur ersten Wand und zur ersten Öffnung eine zweite Öffnung für den Fliessweg ausgeformt. Diese zweite Öffnung hat eine zweite Öffnungsachse, die vorzugsweise der Öffnungsachse der ersten Öffnung entspricht. Auf der zweiten Wand befindet sich eine zweite Auflagefläche, die insbesondere die zweite Öffnung umschliesst und insbesondere der ersten Auflagefläche parallel beabstandet gegenüberliegt. Die zweite Auflagefläche und der innere Tellerabschnitt sind zur Begrenzung der relativen linearen Beweglichkeit des inneren Tellerabschnitts in Richtung zur zweiten Seite und zur zweiten Öffnung derart angeordnet und ausgebildet, dass in der Geschlossenstellung der innere Tellerabschnitt bei auf der zweiten Seite der zweiten Öffnung herrschendem relativem Unterdruck in der ausgefahrenen Stellung mit einer zweiten Fläche in Richtung zur zweiten Seite auf der zweiten Auflagefläche aufliegt. In anderen Worten sind der Abstand und die Lage der zweiten Auflagefläche auf der zweiten Wand und der zweiten Fläche auf dem inneren Tellerabschnitt derart, dass sich der innere Tellerabschnitt mit seiner zweiten Fläche in Richtung zur zweiten Seite auf der zweiten Auflagefläche abstützt, sobald in der Geschlossenstellung des Ventiltellers auf der zweiten Seite der zweiten Öffnung relativer Unterdruck herrscht. Diese Stellung, in welcher sich der innere Tellerabschnitt beim Aufliegen auf der zweiten Auflagefläche befindet, ist die ausgefahrene Stellung des inneren Tellerabschnitts. In einer möglichen Ausführungsform der Erfindung ist die zweite Fläche des inneren Tellerabschnitts auf einer sich radial von der zweiten Aussenfläche nach aussen erstreckenden Schulter angeordnet. Insbesondere handelt es sich hierbei um diejenige Schulter, welche auch als der genannte Anschlag des inneren Tellerabschnitts dient.

Eine wesentliche Anforderung an ein Vakuumventil, welches in einem Herstellungsprozess für Halbleiter zum Einsatz kommt, ist die Vermeidung von Reibpartikeln. Abhängig vom Einsatzgebiet des Ventils kann es wesentlich sein, dass es beim Öffnen und Schliessen des Ventils zu keiner Metall- zu Metall-Berührung kommt. Daher sollte der innere Tellerabschnitt, welcher in der ausgefahrenen Stellung auf der zweiten Auflagefläche aufliegt, vor in Querrichtung erfolgendem Verstellen des Ventiltellers von der Zwischenstellung in die Offenstellung wieder in die eingefahrene Stellung gebracht werden, damit ein reibender Kontakt des inneren Tellerabschnitts auf der zweiten Auflagefläche der zweiten Wand beim Querverstellen des Ventiltellers zwischen der Zwischenstellung und der Offenstellung vermieden wird. Dies kann beispielsweise durch den Einsatz einer Feder erfolgen, welche zwischen dem inneren und dem äusseren Tellerabschnitt wirkt und den inneren Tellerabschnitt im entlasteten Zustand in die eingefahrene Stellung hält. Eine derartige Federanordnung ist aus dem nächstliegenden Stand der Technik bekannt. Ein Nachteil einer solchen Federanordnung besteht darin, dass die Komplexität des Aufbaus des Ventiltellers weiter zunimmt und die Federn das Reinigen des Ventils erschweren. Weiters erhöht der Einsatz von Federn das Risiko einer Partikelgenerierung. Anstelle von Federn können erfindungsgemäss daher auch andere elastisch wirkende Elemente, welche zwischen dem inneren und äusseren Tellerabschnitt wirken und eine Kraft in Richtung zur eingefahrenen Stellung ausüben, eingesetzt werden.

Vorzugsweise wird jedoch auf den Einsatz von derartigen elastischen Elementen zwischen dem inneren und äusseren Tellerabschnitt gänzlich verzichtet. Hierzu sieht die Erfindung insbesondere vor, dass vor Verstellen des Ventiltellers von der Geschlossenstellung in die Offenstellung ein relativer Unterdruck auf der ersten Seite der ersten Öffnung an das Ventil angelegt wird, so dass der innere Tellerabschnitt von der gegebenenfalls eingenommenen ausgefahrenen Stellung oder einer dazwischen liegenden Stellung in die eingefahrene Stellung bewegt wird. Alternativ wird auf der zweiten Seite ein relativer Überdruck angelegt. Ist das Herstellen derartiger Druckverhältnisse vor dem Öffnen des Ventils jedoch nicht möglich, sieht die Erfindung alternativ vor, dass im Ventilgehäuse eine Führung vorgesehen ist, die derart im Ventilgehäuse angeordnet ist, dass beim in Querrichtung erfolgenden Schwenken des Ventiltellers von der Zwischenstellung in die Offenstellung der innere Tellerabschnitt in die eingefahrene Stellung geführt wird.

In einer bevorzugten, vorteilhaften Weiterbildung der Erfindung wird der Antrieb zum Zurückstellen des inneren Tellerabschnitts in die eingefahrene Stellung verwendet. Hierzu ist der mindestens eine Antrieb derart ausgebildet ist, dass der Ventilteller sowohl zwischen der Offenstellung und der Zwischenstellung mittels der Querbewegung schwenkbar oder verschiebbar ist, als auch zwischen der Zwischenstellung, der Geschlossenstellung und einer Initialisierungsstellung mittels der Längsbewegung verschiebbar ist. In der Initialisierungsstellung ist der Abstand des äusseren Tellerabschnitts zur zweiten Wand derart reduziert, dass der innere Tellerabschnitt mit seiner zweiten Fläche auf der zweiten Auflagefläche aufliegt und - insbesondere vollständig - in die eingefahrene Stellung geschoben ist. Die Zwischenstellung liegt zwischen der Geschlossenstellung und der Initialisierungsstellung, wobei die Initialisierungsstellung auf der zweiten Seite, also der Seite der zweiten Öffnung, und die Geschlossenstellung auf der ersten Seite, also der Seite der ersten Öffnung liegt.

Zur Automatisierung des kollisionslosen Schliess- und Öffnungsprozesses sieht die Erfindung vor, dass das Ventil eine Steuerung aufweist, die derart ausgebildet ist und mit dem Antrieb in derartiger Verbindung, insbesondere Steuerverbindung steht, dass der Ventilteller zum gasdichten Unterbrechen des Fliesswegs mittels der Querbewegung des Antriebs von der Offenstellung in die Zwischenstellung und mittels der Längsbewegung des Antriebs von der Zwischenstellung in die Geschlossenstellung verstellbar ist. Ausserdem ist die Steuerung derart ausgebildet und steht mit dem Antrieb in derartiger Verbindung, insbesondere Steuerverbindung, dass der Ventilteller zum vollständigen Öffnen des Fliesswegs mittels der Längsbewegung des Antriebs von der Geschlossenstellung in die Initialisierungsstellung und im Anschluss in der Zwischenstellung und mittels der Querbewegung des Antriebs von der Zwischenstellung in die Offenstellung verstellbar ist. Vor dem Öffnen des Ventils kann sich der innere Tellerabschnitt somit in einer beliebeigen Stellung zwischen der eingefahrenen Stellung und der ausgefahrenen Stellung befinden, da durch das Verstellen des Ventiltellers von der Geschlossenstellung in die Initialisierungsstellung der innere Tellerabschnitt - insbesondere vollständig - in die eingefahrene Stellung geschoben wird. Somit werden ein reibender Kontakt oder eine Kollision zwischen dem inneren Tellerabschnitt und dem Ventilgehäuse, insbesondere der zweiten Auflagefläche, und eine hierdurch bewirkte Partikelgenerierung vermieden. Bei der Steuerung kann es sich abhängig vom eingesetzten Antrieb um eine elektronische, elektrische, mechanische, pneumatische, hydraulische oder sonstige Steuerung handeln, wobei auch ein geeignetes Getriebe als Steuerung zu verstehen ist. Insbesondere handelt es sich bei der Steuerung um eine elektronische Steuerung, welche mit dem elektrischen Antrieb in entsprechender elektrischer Signalverbindung steht.

Das erfindungsgemässe Ventil wird nachfolgend anhand von in den Zeichnungen schematisch dargestellten konkreten Ausführungsbeispielen rein beispielhaft näher beschrieben.

Im Einzelnen zeigen
- Figur 1: eine Schrägansicht auf ein erfindungsgemässes Ventil in der Zwischenstellung;
- Figur 2: eine schräge Schnittansicht auf das Ventil aus Figur 1 in der Zwischenstellung;
- Figur 3a: eine seitliche Querschnittsansicht auf das Ventil aus Figur 1 in der Zwischenstellung mit dem inneren Tellerabschnitt in eingefahrener Stellung;
- Figur 3b: eine seitliche Querschnittsansicht auf das Ventil in der Geschlossenstellung mit dem inneren Tellerabschnitt in eingefahrener Stellung;
- Figur 3c: eine seitliche Querschnittsansicht auf das Ventil in der Geschlossenstellung mit dem inneren Tellerabschnitt in ausgefahrener Stellung;
- Figur 3d: eine seitliche Querschnittsansicht auf das Ventil in der Initialisierungsstellung mit dem inneren Tellerabschnitt in eingefahrener Stellung;
- Figur 4a: eine Detailansicht aus Figur 3a;
- Figur 4b: eine Detailansicht aus Figur 3b;
- Figur 4c: eine Detailansicht aus Figur 3c;
- Figur 4d: eine Detailansicht aus Figur 3d; und
- Figur 5: eine seitliche Detail-Querschnittsansicht auf eine alternative Ausführungsform des Ventils in der Zwischenstellung mit dem inneren Tellerabschnitt in eingefahrener Stellung.

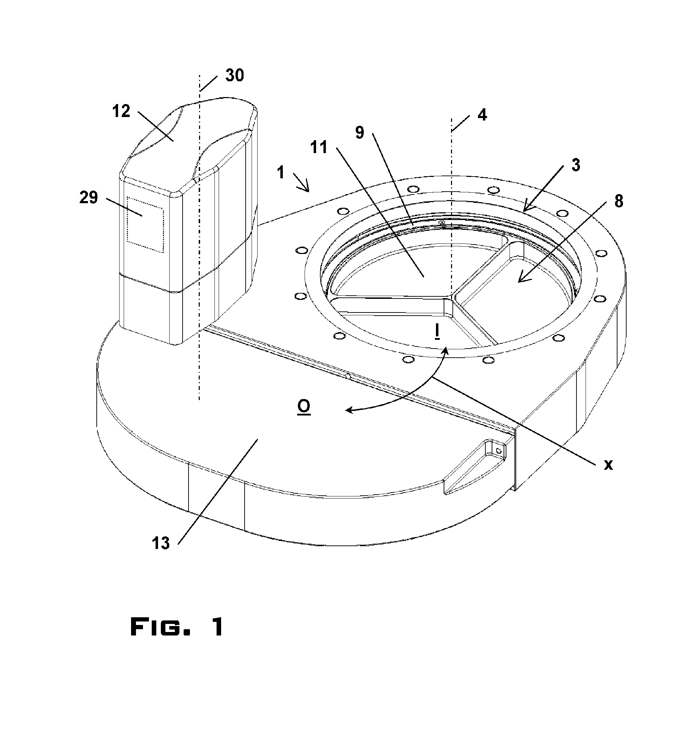

Die Figuren 1 bis 4d zeigen eine gemeinsame, exemplarische Ausführungsform eines erfindungsgemässen Ventils in unterschiedlichen Zuständen, aus unterschiedlichen Ansichten und in unterschiedlichen Detaillierungsgraden. Daher werden diese Figuren gemeinsam beschrieben, wobei zum Teil auf bereits in vorangegangenen Figuren erläuterte Bezugszeichen und Merkmale nicht erneut eingegangen wird.

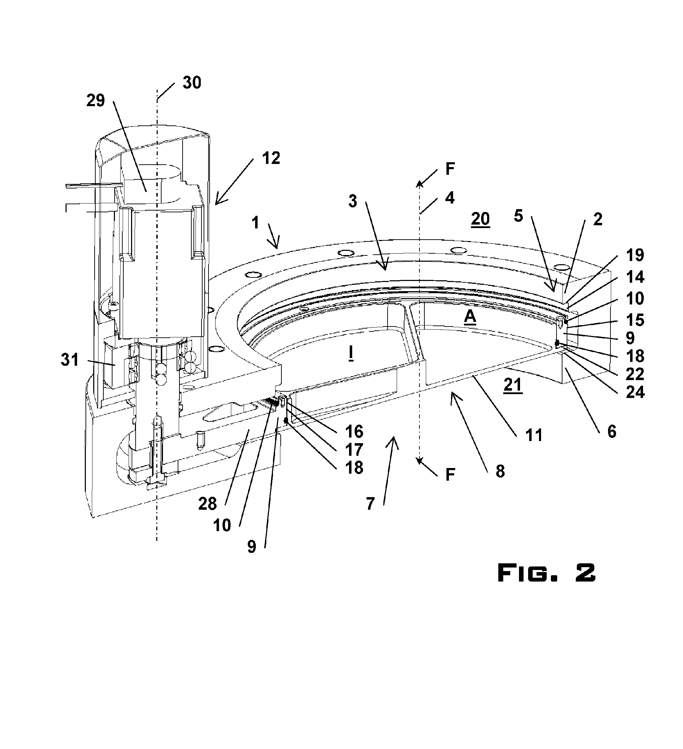

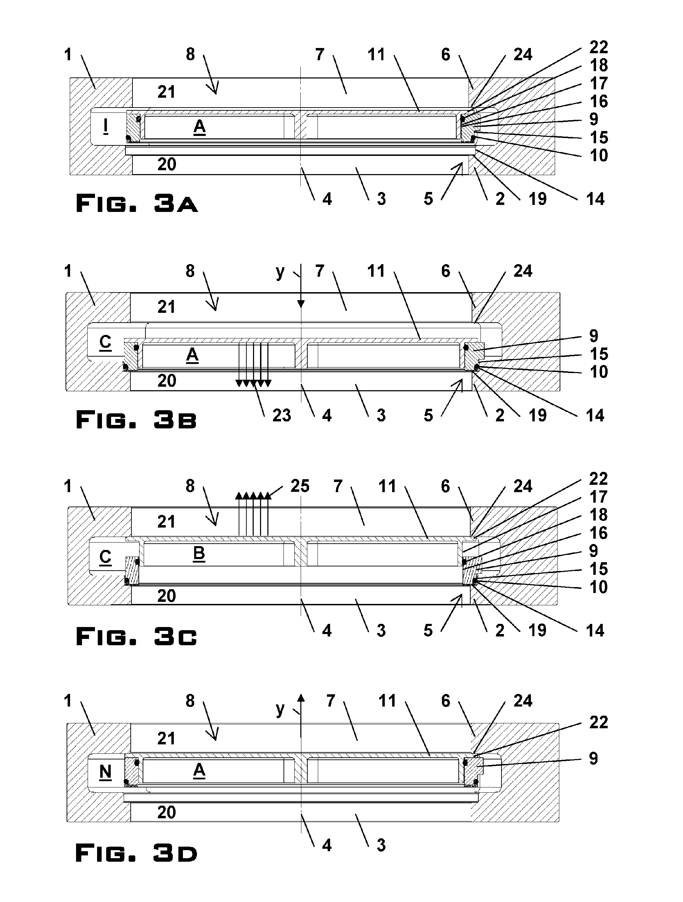

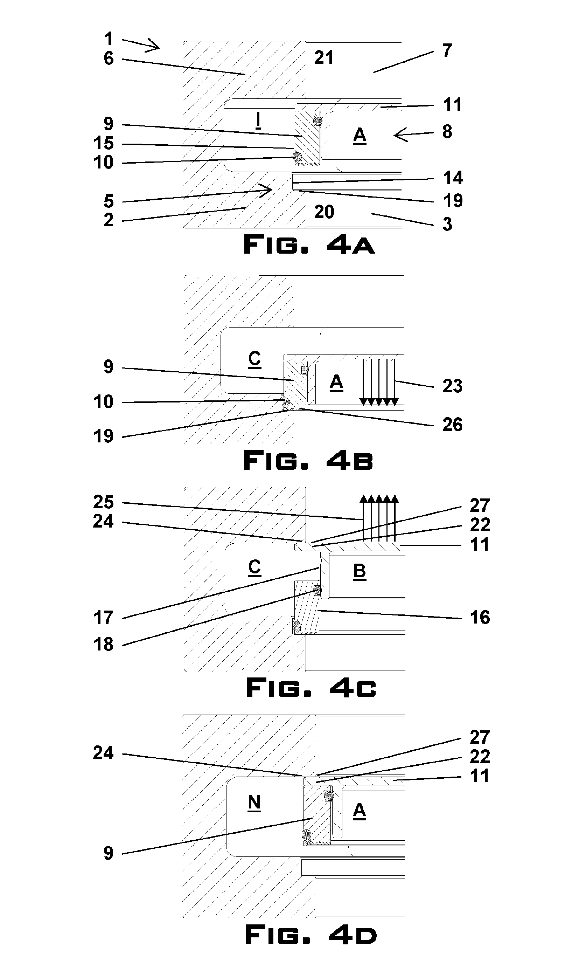

In den Figuren 1 bis 4d ist eine mögliche Ausführungsform des erfindungsgemässen Ventils in Form eines Pendelventils dargestellt. Das Ventil zum im Wesentlichen gasdichten Unterbrechen eines Fliesswegs F, der in Figur 2 anhand von Pfeilen symbolisiert ist, besitzt ein Ventilgehäuse 1, welcher eine erste Öffnung 3 und eine gegenüberliegende zweite Öffnung 7 aufweist. Beide Öffnungen 3 und 7 haben einen kreisrunden Querschnitt. In der Geschlossenstellung C eines Ventiltellers 8, Figuren 3b, 3c, 4b und 4c, sind die beiden Öffnungen 3 und 7 mittels des Ventiltellers 8 gasdicht voneinander getrennt, während die beiden Öffnungen 3 und 7 in der Offenstellung O des Ventiltellers 8 miteinander verbunden sind. Die Offenstellung O des Ventiltellers 8 ist in Figur 1 anhand des gebogenen Pfeils veranschaulicht.

Das Ventilgehäuse 1 setzt sich insbesondere aus einer ersten Wand 2, in welcher die erste Öffnung 3 ausgeformt ist, und einer parallel zur ersten Wand 2 liegenden zweiten Wand 6, in welcher die zweite Öffnung 7 ausgeformt ist, zusammen. Die erste Wand 2 befindet sich auf einer ersten Seite 20 des Ventilgehäuses 1 und die zweite Wand 6 auf einer zweiten Seite 21 des Ventilgehäuses 1. Die zweite Wand 6 hat in beabstandeter, im Wesentlichen paralleler Gegenüberlage zur ersten Wand 2 und zur ersten Öffnung 3 die zweite Öffnung 7 für den Fliessweg F, wie in den Figuren 2 bis 4d gezeigt.

Beide Öffnungen 3 und 7 haben eine gemeinsame geometrische geradlinige Öffnungsachse 4, welche durch die geometrischen Mittelpunkte der kreisförmigen Öffnungen 3 und 7 verläuft, wie in den Figuren 1 bis 3d gezeigt.

Die erste Öffnung 3 wird von einem Ventilsitz 5 umschlossen. Dieser Ventilsitz 5 wird von einer radial nach innen weisenden und parallel zur Öffnungsachse 4 verlaufenden, die Form einer geometrischen Kreiszylindermantelfläche aufweisenden erste Innenfläche 14, welche im Ventilgehäuse 1 ausgeformt ist, gebildet, wie in Figur 2 gezeigt.

Ausserdem besitzt das Ventil einen Ventilteller 8 mit einem ringförmigen äusseren Tellerabschnitt 9 und einem geschlossenen, kreisscheibenförmigen inneren Tellerabschnitt 11, wie in den Figuren 2 bis 4d gezeigt.

Der äussere Tellerabschnitt 9 hat eine radial nach aussen weisende und parallel zur Öffnungsachse 4 verlaufende erste Aussenfläche 15, welche die Form einer geometrischen Kreiszylindermantelfläche aufweist. Diese erste Aussenfläche 15 hat eine mit der ersten Innenfläche 14 des Ventilsitzes 5 korrespondierende Form und ist somit derart angeordnet und ausgebildet, dass in einer Geschlossenstellung C des äusseren Tellerabschnitts 9 des Ventiltellers 8 mittels einer ersten Dichtung 10 ein radial dichtender Kontakt mit der ersten Innenfläche 14 besteht. Die erste Dichtung 10 ist in Form eines O-Rings mit einem kreisförmigen Querschnitt auf der ersten Aussenfläche 15 des äusseren Tellerabschnitts 9 zum Herstellen des radial dichtenden Kontakts mit der ersten Innenfläche 14 des Ventilsitzes 5 in einer Nut, die den äusseren Tellerabschnitts 9 umläuft, fixiert, wie in den Figuren 2 bis 4d gezeigt.

Der innere Tellerabschnitt 11 ist innerhalb des äusseren Tellerabschnitts 9 in Richtung parallel zur Öffnungsachse 3 relativ zum äusseren Tellerabschnitt 9 zwischen einer eingefahrenen Stellung A und einer ausgefahrenen Stellung B linear bewegbar auf dichte Weise gelagert. Hierzu weist der ringförmige äussere Tellerabschnitt 9 eine radial nach innen weisende und parallel zur Öffnungsachse 4 verlaufende zweite Innenfläche 16 auf, welche die Form einer geometrischen Kreiszylindermantelfläche hat. Die zweite Innenfläche 16 und die erste Aussenfläche 15 des äusseren Tellerabschnitts 9 verlaufen konzentrisch zueinander. Der kreisscheibenförmige innere Tellerabschnitt 11 hat eine radial nach aussen weisende und parallel zur Öffnungsachse 4 verlaufende, mit der zweiten Innenfläche 16 korrespondierende zweite Aussenfläche 17, welche ebenfalls die Form einer geometrischen Kreiszylindermantelfläche hat. Zwischen dieser zweiten Aussenfläche 17 und der zweiten Innenfläche 16 besteht über eine dazwischen liegende zweite Dichtung 18 ein radial dichtender Kontakt in dem Bereich zwischen der eingefahrenen Stellung A und der ausgefahrenen Stellung B. Diese zweite Dichtung 18 ist als O-Ring mit kreisförmigem Querschnitt ausgebildet. Im in den Figuren 1 bis 4d gezeigten Ausführungsbeispiel ist die zweite Dichtung 18 in einer inneren Nut auf der zweiten Innenfläche 16 des äusseren Tellerabschnitts 9 zum Herstellen des radial dichtenden Kontakts mit der zweiten Aussenfläche 17 des inneren Tellerabschnitts 11 fixiert.

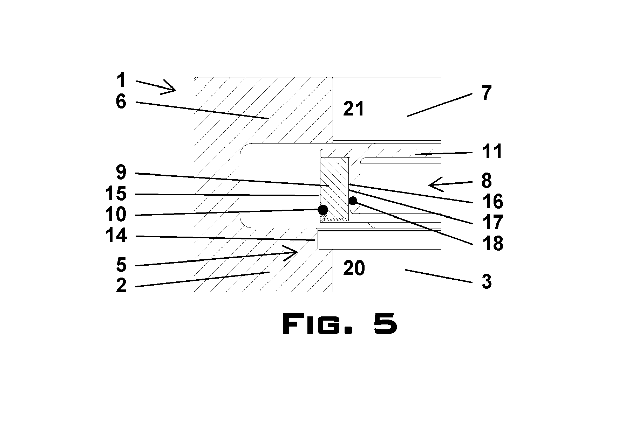

In Figur 5 ist hingegen eine alternative Ausführungsform gezeigt, die sich von der in den Figuren 1 bis 4d gezeigten Ausführungsform dadurch unterscheidet, dass die zweite Dichtung 17 in einer äusseren Nut auf der zweiten Aussenfläche 17 des inneren Tellerabschnitts 11 zum Herstellen des radial dichtenden Kontakts mit der zweiten Innenfläche 16 des äusseren Tellerabschnitts 9 fixiert ist.

Der äussere Tellerabschnitt 9 ist über einen seitlich an dem äusseren Tellerabschnitt 9 angeordneten, sich senkrecht zur Öffnungsachse 4 erstreckenden Arm 28 mit einem elektrischen Antrieb 12 verbunden. Dieser Arm 28 befindet sich in der Geschlossenstellung C des Ventiltellers 8 ausserhalb des entlang der Öffnungsachse 4 geometrisch projizierten Öffnungsquerschnitts der ersten Öffnung 3, wie in Figuren 1, 2, 3b und 3c erkennbar.

Ein elektrischer Antrieb 12 ist durch Einsatz eines entsprechenden Getriebes 31 derart ausgebildet, dass der Ventilteller 8 - wie bei einem Pendelventil üblich - mittels der Querbewegung x des Antriebs 12 quer zur Öffnungsachse 4 und im Wesentlichen parallel über den Querschnitt der ersten Öffnung 3 und senkrecht zur Öffnungsachse 4 in Form einer Schwenkbewegung um die Schwenkachse 30 zwischen einer Offenstellung O und einer Zwischenstellung I, wie in der Figur 1 gezeigt, schwenkbar und mittels einer parallel zur Öffnungsachse 4 erfolgenden Längsbewegung y des Antriebs 12 linear verschiebbar ist, wie in den Figuren 3a bis 4d gezeigt. In der Offenstellung O, ist der Ventilteller 8 in einem seitlich neben der ersten Öffnung 3 angeordneten Verweilabschnitt 13 positioniert, so dass die erste Öffnung 3 und der Fliessweg F freigegeben sind, Figur 1. In der Zwischenstellung I, Figuren 1, 2, 3a und 4a, ist der Ventilteller 8 über der ersten Öffnung 3 positioniert und überdeckt den Öffnungsquerschnitt der ersten Öffnung 3. In der Geschlossenstellung C, Figuren 3b, 3c, 4b und 4c, ist erste Öffnung 3 gasdicht geschlossen und der Fliessweg F unterbrochen, indem ein gasdichter Kontakt zwischen der ersten Aussenfläche 15 des äusseren Tellerabschnitt 9 und der ersten Innenfläche 14 des Ventilsitz 5 besteht.

Aufgrund der Zweiteilung des Ventiltellers 8 in einen mit dem Antrieb 12 über den Arm 28 gekoppelten und mit dem Ventilsitz 5 in gasdichten Kontakt bringbaren äusseren Tellerabschnitt 9 und einen relativ zum äusseren Tellerabschnitt 9 in Richtung parallel zur Öffnungsachse 4 im Wesentlichen frei bewegbaren inneren Tellerabschnitt 11 wirkt in der Geschlossenstellung C eine Druckdifferenz am Ventilteller 8 im Wesentlichen auf den bewegbaren inneren Tellerabschnitt 11. Der innere Tellerabschnitt 11 ist in Richtung parallel zur Öffnungsachse 4 im Wesentlichen entkoppelt von dem äusseren Tellerabschnitt 9 und stützt sich direkt oder indirekt auf das Ventilgehäuse 1 ab, wie im Folgenden gezeigt.

Auf der ersten Wand 1 ist eine die erste Öffnung 3 umschliessende erste Auflagefläche 19 im Ventilgehäuse 1 ausgeformt. Diese erste Auflagefläche 19 wird von einem an die erste Innenfläche 14 angrenzenden, im Wesentlichen senkrecht bzw. radial zur Öffnungsachse 4 verlaufenden Absatz 19 in der ersten Öffnung 3 gebildet, wie in den Figuren 3a bis 4d gezeigt. Dieser Absatz 19 ist ringartig um die erste Öffnung 3 herum angeordnet und erstreckt sich entlang einer geometrischen Ebene, zu welcher die Öffnungsachse 4 eine geometrische Normale ist. Dieser Absatz 19 stellt somit die in Richtung zum äusseren Tellerabschnitt 9 weisende erste Auflagefläche 19 für eine ersten Fläche 26 des äusseren Tellerabschnitts 9 dar. Der Absatz 19 und die erste Fläche 26 haben einander korrespondierende Formen, so dass die erste Fläche 26 auf der ersten Auflagefläche 19 zum Liegen kommen kann. Die erste Auflagefläche 19 und der äussere Tellerabschnitt 9 sind somit derart angeordnet und ausgebildet, dass in der Geschlossenstellung C der äussere Tellerabschnitt 9 mit einer ersten Fläche 26 in Richtung zur ersten Seite 20 auf der ersten Auflagefläche 19 aufliegt, wie in den Figuren 3b, 3c, 4b und 4c gezeigt. Die erste Auflagefläche 19 der ersten Wand 2 bildet somit eine Wegbegrenzung für den äusseren Tellerabschnitt 9 beim linearen Verstellen dieses äusseren Tellerabschnitts 9 entlang der Öffnungsachse 4 von der Zwischenstellung I, Figuren 3a und 4a, in die Geschlossenstellung C, Figuren 3b und 4b, und definiert somit die Geschlossenstellung C des äusseren Tellerabschnitts 9.

In der Ausgangsstellung befindet sich der innere Tellerabschnitt 11 in eingefahrener Stellung A im äusseren Tellerabschnitt 9, wie in den Figuren 3a, 3b, 4a und 4b gezeigt. Zur Begrenzung der relativen linearen Beweglichkeit des inneren Tellerabschnitts 11 in Richtung zur ersten Seite 20 und zur ersten Öffnung 3 ist ein Anschlag 22 zwischen dem äusseren Tellerabschnitt 9 und dem inneren Tellerabschnitt 11 angeordnet. Dieser Anschlag wird von einer Schulter 22 des inneren Tellerabschnitts 11 gebildet, die sich radial von der zweiten Aussenfläche 17 des inneren Tellerabschnitts 11 nach aussen erstreckt. Die Schulter 22 bewirkt, dass der innere Tellerabschnitt 11 in der Geschlossenstellung C des äusseren Tellerabschnitts 9 bei auf der ersten Seite 20 der ersten Öffnung 3 herrschendem relativem Unterdruck 23 in der eingefahrenen Stellung A auf dem äusseren Tellerabschnitt 9 aufliegt, wie in den Figuren 3b und 4b gezeigt. Somit definiert die Schulter 22 durch ihren Anschlag auf den äusseren Tellerabschnitt 11 die eingefahrene Stellung A, wie in den Figuren 3b und 4b gezeigt. Herrscht in der Geschlossenstellung C, in welcher sich äussere Tellerabschnitt 9 mit seiner ersten Fläche 26 auf der ersten Auflagefläche 19 aufliegt, wie in Figur 3b und 4b gezeigt, ein relativer Unterdruck auf der ersten Seite 20 der ersten Öffnung 3, worunter auch ein relativer Überdruck auf der zweiten Seite 21 der zweiten Öffnung 7 zu verstehen ist, so wird der innere Tellerabschnitt 11 in Richtung zur ersten Seite 20 und zur ersten Öffnung 3 gedrückt. Der innere Tellerabschnitt 11 liegt in der eingefahrenen Stellung A auf dem äusseren Tellerabschnitt 9 auf, indem sich die Schulter 22 des inneren Tellerabschnitts 11 auf dem äusseren Tellerabschnitt 9 abstützt. Somit stützt sich der innere Tellerabschnitt 11 indirekt, nämlich über den äusseren Tellerabschnitt 9, auf der ersten Auflagefläche 19 der ersten Wand 2 des Ventilgehäuses 5 ab, wie in den Figuren 3b und 4b gezeigt. Durch dieses Abstützen des gesamten Ventiltellers 8 auf dem Ventilgehäuse 1 wird der Arm 28 des Antriebs 12 sowie der Antrieb 12 selbst von dem herrschenden Unterdruck 23 nicht belastete, da im Wesentlichen der gesamte Differenzdruck auf das Ventilgehäuse 1 wirkt.

Kommt es in der Geschlossenstellung C zu einer Umkehr des Differenzdrucks, so dass auf der zweiten Seite 21 der zweiten Öffnung 7 ein relativer Unterdruck 25 herrscht, worunter auch ein relativer Überdruck auf der ersten Seite 20 der ersten Öffnung 3 zu verstehen ist, wirkt auf den Ventilteller 8 eine Kraft in Richtung zur zweiten Öffnung 7 und zur zweiten Seite 21. Somit wird der bewegliche innere Tellerabschnitt 11 aus seiner eingefahrenen Stellung A in die ausgefahrenen Stellung B in Richtung zur zweiten Seite 21 bewegt. Um auch in dieser Situation ein Abstützen des inneren Tellerabschnitts 11 auf das Ventilgehäuse 1 zu bewirken, ist auf der zweiten Wand 6 eine die zweite Öffnung 7 rings umschliessende zweite Auflagefläche 24 ausgeformt, welche als Auflagefläche für den inneren Tellerabschnitt 11 dient. Diese zweite Auflagefläche 24 erstreckt sich senkrecht bzw. radial zur Öffnungsachse 4 und verläuft entlang einer geometrischen Ebene, zu welcher die Öffnungsachse 4 eine Normale bildet. Die sich auf dem inneren Tellerabschnitt 11 radial von der zweiten Aussenfläche 17 nach aussen erstreckende Schulter 22 und die zweite Auflagefläche 24 haben derart korrespondierende Dimensionen und sind derart angeordnet und ausgebildet, dass eine zur zweiten Seite 21 weisende zweite Fläche 27 der Schulter 22 des inneren Tellerabschnitts 11 auf der zweite Auflagefläche 24 zum Liegen kommen kann. Diese Schulter 21 mit ihrer zweiten Fläche 27 und die zweite Auflagefläche 24 der zweiten Wand 6 dienen somit zur Begrenzung der relativen linearen Beweglichkeit des inneren Tellerabschnitts 11 in Richtung zur zweiten Seite 21 und zur zweiten Öffnung 7. Befindet sich der äussere Tellerabschnitt 9 in der Geschlossenstellung C und herrscht auf der zweiten Seite 21 der zweiten Öffnung 7 relativer Unterdruck 25, wie in den Figur 3c und 4c gezeigt, so fährt der innere Tellerabschnitt 11 in der ausgefahrenen Stellung B und liegt mit der zweiten Fläche 27 in Richtung zur zweiten Seite 21 auf der zweiten Auflagefläche 24 auf. Somit stützt sich der innere Tellerabschnitt 11 direkt auf der zweiten Auflagefläche 24 der zweiten Wand 7 des Ventilgehäuses 1 auf, so dass auch bei diesen Druckverhältnissen sowohl der Antrieb 12 als auch der Arm 28 des Antriebs 28 von Kräften am Ventilteller 8, welche aufgrund des Unterdrucks 25 auf der zweiten Seite 21 herrschen, im Wesentlichen befreit sind.

Herrschte in der Geschlossenstellung C relativer Unterdruck auf der zweiten Seite 21 der zweiten Öffnung 7 und befindet sich der innere Tellerabschnitt 11 in der ausgefahrenen Stellung B, wie in den Figuren 3c und 4c gezeigt, muss der innere Tellerabschnitt 11 vor dem Schwenken des Ventiltellers 8 von der Zwischenstellung I, Figur 3a, in die Offenstellung O wieder in die eingefahrene Stellung A gebracht werden, um einen reibenden und Reibpartikel erzeugenden Kontakt zwischen dem inneren Tellerabschnitt 11 und der zweiten Wand 6 beim Durchführen der Querbewegung x, Figur 1, zu verhindern. Hierfür sieht die Erfindung in diesem Ausführungsbeispiel vor, dass der Antrieb 12, insbesondere das Getriebe 31 des Antriebs 12, derart ausgebildet ist, dass der Ventilteller 8 zwischen der Offenstellung O, Figur 1, und der Zwischenstellung I, Figuren 3a und 4a, mittels der Querbewegung x um die Schwenkachse 30 schwenkbar, sowie zwischen der Zwischenstellung I, Figuren 3a und 4a, der Geschlossenstellung C, Figuren 3b, 3c, 4b und 4c, und einer Initialisierungsstellung N, Figuren 3d und 4d, mittels der Längsbewegung y entlang der Öffnungsachse 4 linear verschiebbar ist. Die Zwischenstellung I liegt zwischen der Geschlossenstellung C und der Initialisierungsstellung N. In der Initialisierungsstellung N, Figuren 3d und 4d, ist der Abstand des äusseren Tellerabschnitts 9 zur zweiten Wand 6 derart reduziert, dass der innere Tellerabschnitt 11 mit seiner zweiten Fläche 27 auf der zweiten Auflagefläche 24 aufliegt und vollständig in die eingefahrene Stellung A geschoben ist, so dass in der Initialisierungsstellung N die Schulter 22 des inneren Tellerabschnitts 11 auf dem äusseren Tellerabschnitt 9 aufliegt, wie in den Figuren 3d und 4d gezeigt. Ausgehend von dieser Initialisierungsstellung N, Figuren 3d und 4d, kann der Ventilteller 8 mit dem inneren Tellerabschnitt 11 in eingefahrener Stellung A zum vollständigen Öffnen des Ventils mittels des Antriebs 12 linear in die Zwischenstellung I, Figuren 3a und 4a, verstellt und von dort mittels der schwenkenden Querbewegung x in die Offenstellung O geschwenkt werden, ohne dass es zu einer Kollision zwischen dem inneren Tellerabschnitt 11 und dem Ventilgehäuse 1 kommt.

Um ein automatisiertes Öffnen und Schliessen des Ventils zu ermöglichen, sieht das Ventil eine elektronische Steuerung 29 vor, die derart ausgebildet ist und mit dem Antrieb 12 und dem Getriebe 31 in derartiger Verbindung steht, dass der Ventilteller 8 zum gasdichten Unterbrechen des Fliesswegs F und zum vollständigen Öffnen des Fliesswegs F entsprechend verstellbar ist. Zum gasdichten Unterbrechen des Fliesswegs F ist der Ventilteller 8 durch die Steuerung 29 mittels der Querbewegung x des Antriebs 12 von der Offenstellung O, Figur 1, in die Zwischenstellung I, Figuren 3a und 4a, und mittels der Längsbewegung y des Antriebs 12 von der Zwischenstellung I, Figuren 3a und 4a, in die Geschlossenstellung C, Figuren 3b und 4b verstellbar. Zum vollständigen Öffnen des Fliesswegs F ist der Ventilteller 8 durch die Steuerung 29 mittels der Längsbewegung y des Antriebs 12 von der Geschlossenstellung C, in welcher sich der innere Tellerabschnitt 11 in einer beliebeigen Stellung zwischen der eingefahrenen Stellung A, Figuren 3b und 4b, und der ausgefahrenen Stellung B, Figuren 3c und 4c befindet, über die Initialisierungsstellung N zum vollständigen Schieben des inneren Tellerabschnitts 11 in die eingefahrene Stellung B, Figuren 3d und 4d, in der Zwischenstellung I, Figuren 3a und 4a, und von dort aus mittels der Querbewegung x des Antriebs 12 von der Zwischenstellung I, Figuren 3a und 4a, in die Offenstellung O, Figur 1, verstellbar.

Alternativ besteht die Möglichkeit, dass auch beim Schliessen des Ventils die Initialisierungsstellung I angefahren wird. Insbesondere im Falle einer nicht-elektronischen Steuerung kann dies zur Vereinfachung des Aufbaus der Steuerung von Vorteil sein. In diesem Fallen entspricht die Bewegungssequenz des Ventiltellers 8 beim Schliessen derjenigen beim Öffnen.

Im vorliegenden Ausführungsbeispiel ist der Antrieb 12 als ein Elektromotor ausgebildet, wobei das Getriebe 31 derart umschaltbar ist, dass ein Antreiben des Antriebs 12 entweder die Querbewegung x oder die Längsbewegung y bewirkt. Der Antrieb 12 und das Getriebe 31 werden von der Steuerung 29 elektronisch angesteuert. Somit ist es möglich, durch ein der Steuerung zugeführtes Eingangssignal, das die Verstellrichtung, also Öffnen oder Schliessen, vorgibt, die Bewegungssequenz des Ventiltellers 8 automatisch ausführen zu lassen. Alternativ besteht die Möglichkeit, dass die Steuerung 29 von dem Getriebe 31 gebildet wird, wobei - insbesondere abhängig von der Verstellrichtung des Antriebs 12 - die einzelnen Stellungen angefahren werden. Derartige Getriebe, insbesondere mit Kulissenschaltungen, sind aus dem Stand der Technik bekannt. Weiters ist es möglich, mehrere Antriebe zum Bewirken der Querbewegung x und der Längsbewegung y einzusetzen, wobei die Steuerung 29 die Ansteuerung der Antriebe übernimmt.

Das beschriebene Pendelventil eignet sich insbesondere für den Einsatz als Regelventil, wobei das präzise Regeln des Durchflusses nicht nur durch schwenkendes Verstellen des Ventiltellers 8 zwischen der Offenstellung O und der Zwischenstellung I mittels der Querbewegung x, sondern vor allem durch lineares Verstellen des Ventiltellers 8 entlang der Öffnungsachse 4 zwischen der Zwischenstellung I, der Geschlossenstellung C und der Initialisierungsstellung N mittels der Längsbewegung y möglich ist. Somit kann das beschriebene Pendelventil auch für präzise Regelaufgaben eingesetzt werden. Im Falle eines molekularen anstelle eines laminaren Flusses sind die auf dem Ventilteller 8 im Regelbetrieb angreifenden Kräfte derart gering, dass der innere Tellerabschnitt 11 von der zweiten Dichtung 18 festgehalten wird und sich nicht verstellt. Aufgrund der Dämpfung des Ventiltellers 8 insbesondere durch die elastischen Dichtungen 10 und 18 kann ein Vibrieren oder Flattern der inneren Tellerabschnitts 11 vermieden werden.

## Patentansprüche

1. Ventil zum im Wesentlichen gasdichten Unterbrechen eines Fliesswegs (F), mit
• einem Ventilgehäuse (1) mit einer ersten Wand (2), die eine erste Öffnung (3) für den Fliessweg (F) mit einer geometrischen Öffnungsachse (4) und einen die erste Öffnung (3) umschliessenden Ventilsitz (5) auf einer ersten Seite (20) des Ventilgehäuses (1) aufweist,
• einem Ventilteller (8) mit
- einem insbesondere ring- oder rahmenartigen äusseren Tellerabschnitt (9) und
- einem geschlossenen inneren Tellerabschnitt (11), der innerhalb des äusseren Tellerabschnitts (9) in Richtung parallel zur Öffnungsachse (3) relativ zum äusseren Tellerabschnitt (9) zwischen einer eingefahrenen Stellung (A) und einer ausgefahrenen Stellung (B) linear bewegbar auf dichte Weise gelagert ist,
• mindestens einem Antrieb (12), der mit dem äusseren Tellerabschnitt (9) verbunden ist und der derart ausgebildet ist, dass der Ventilteller (8) zwischen
- einer Offenstellung (O), in welcher der Ventilteller (8) in einem seitlich neben der ersten Öffnung (3) angeordneten Verweilabschnitt (13) positioniert ist und die erste Öffnung (3) und den Fliessweg (F) freigibt, und
- einer Zwischenstellung (I), in welcher der Ventilteller (8) über der ersten Öffnung (3) positioniert ist und den Öffnungsquerschnitt der ersten Öffnung (3) überdeckt,
mittels einer im Wesentlichen quer zur Öffnungsachse (4) erfolgenden Querbewegung (x) schwenkbar oder verschiebbar ist und
zwischen
- der Zwischenstellung (I) und
- einer Geschlossenstellung (C), in welcher ein die erste Öffnung (3) gasdicht schliessender und den Fliessweg (F) unterbrechender gasdichter Kontakt zwischen dem äusseren Tellerabschnitt (9) und dem Ventilsitz (5) besteht,
mittels einer parallel zur Öffnungsachse (4) erfolgenden Längsbewegung (y) verschiebbar ist,
wobei in der Geschlossenstellung (C) eine Druckdifferenz am Ventilteller (8) im Wesentlichen auf den bewegbaren inneren Tellerabschnitt (11) wirkt und sich der innere Tellerabschnitt (11) in Richtung parallel zur Öffnungsachse (4) im Wesentlichen entkoppelt von dem äusseren Tellerabschnitt (9) direkt oder indirekt auf das Ventilgehäuse (1) abstützt,
**dadurch gekennzeichnet, dass**
• der Ventilsitz (5) eine radial nach innen weisende und parallel zur Öffnungsachse (4) verlaufende erste Innenfläche (14) aufweist,
• der äussere Tellerabschnitt (9) eine radial nach aussen weisende und parallel zur Öffnungsachse (4) verlaufende erste Aussenfläche (15) aufweist, die derart angeordnet und ausgebildet ist, dass in der Geschlossenstellung (C) über eine dazwischen liegende erste Dichtung (10) ein radial dichtender Kontakt mit der ersten Innenfläche (14) besteht,
• der äussere Tellerabschnitt (9) eine radial nach innen weisende und parallel zur Öffnungsachse (4) verlaufende zweite Innenfläche (16) aufweist und
• der innere Tellerabschnitt (11) eine radial nach aussen weisende und parallel zur Öffnungsachse (4) verlaufende zweite Aussenfläche (17) aufweist, die derart angeordnet und ausgebildet ist, dass über eine dazwischen liegende zweite Dichtung (18) ein radial dichtender Kontakt mit der zweiten Innenfläche (16) in dem Bereich zwischen der eingefahrenen Stellung (A) und der ausgefahrenen Stellung (B) besteht.

2. Ventil nach Anspruch 1,
**dadurch gekennzeichnet, dass**
• die erste Wand (1) eine insbesondere die erste Öffnung (3) umschliessende erste Auflagefläche (19) aufweist und
• die erste Auflagefläche (19) und der äussere Tellerabschnitt (9) derart angeordnet und ausgebildet sind, dass in der Geschlossenstellung (C) der äussere Tellerabschnitt (9) mit einer ersten Fläche (26) in Richtung zur ersten Seite (20) auf der ersten Auflagefläche (19) aufliegt.

3. Ventil nach Anspruch 2,
**dadurch gekennzeichnet, dass**
die erste Auflagefläche als ein an die erste Innenfläche (14) angrenzender, im Wesentlichen senkrecht zur Öffnungsachse verlaufender Absatz (19) in der ersten Öffnung (3) ausgebildet ist.

4. Ventil nach einem der Ansprüche 1 bis 3,
**dadurch gekennzeichnet, dass**
ein Anschlag (22) zwischen dem äusseren Tellerabschnitt (9) und dem inneren Tellerabschnitt (11) zur Begrenzung der relativen linearen Beweglichkeit des inneren Tellerabschnitts (11) in Richtung zur ersten Seite (20) und zur ersten Öffnung (3) derart angeordnet ist, dass in der Geschlossenstellung (C) der innere Tellerabschnitt (11) bei auf der ersten Seite (20) der ersten Öffnung (3) herrschendem relativem Unterdruck (23) in der eingefahrenen Stellung (A) auf dem äusseren Tellerabschnitt (9) aufliegt.

5. Ventil nach Anspruch 4,
**dadurch gekennzeichnet, dass**
der Anschlag als eine sich radial von der zweiten Aussenfläche (17) nach aussen erstreckende Schulter (22) des inneren Tellerabschnitts (11) ausgebildet ist.

6. Ventil nach einem der Ansprüche 1 bis 5,
**dadurch gekennzeichnet, dass**
• das Ventilgehäuse (1) auf einer zweiten Seite (21) eine zweite Wand (6) aufweist, die in beabstandeter, im Wesentlichen paralleler Gegenüberlage zur ersten Wand (2) und zur ersten Öffnung (3) eine zweite Öffnung (7) für den Fliessweg (F) aufweist,
• die zweite Wand (2) eine insbesondere die zweite Öffnung (7) umschliessende zweite Auflagefläche (24) aufweist und
• die zweite Auflagefläche (24) und der innere Tellerabschnitt (11) zur Begrenzung der relativen linearen Beweglichkeit des inneren Tellerabschnitts (11) in Richtung zur zweiten Seite (21) und zur zweiten Öffnung (7) derart angeordnet und ausgebildet sind, dass in der Geschlossenstellung (C) der innere Tellerabschnitt (11) bei auf der zweiten Seite (21) der zweiten Öffnung (7) herrschendem relativem Unterdruck (25) in der ausgefahrenen Stellung (B) mit einer zweiten Fläche (27) in Richtung zur zweiten Seite (21) auf der zweiten Auflagefläche (24) aufliegt.

7. Ventil nach Anspruch 6,
**dadurch gekennzeichnet, dass**
die zweite Fläche (27) des inneren Tellerabschnitts (11) auf einer sich radial von der zweiten Aussenfläche (17) nach aussen erstreckenden Schulter (22) angeordnet ist.

8. Ventil nach Anspruch 6 oder 7,
**dadurch gekennzeichnet, dass**
der mindestens eine Antrieb (12) derart ausgebildet ist, dass der Ventilteller (8) zwischen
• der Offenstellung (O), und
• der Zwischenstellung (I),
mittels der Querbewegung (x) schwenkbar oder verschiebbar ist und zwischen
• der Zwischenstellung (I),
• der Geschlossenstellung (C) und
• einer Initialisierungsstellung (N), in welcher der Abstand des äusseren Tellerabschnitts (9) zur zweiten Wand (6) derart reduziert ist, dass der innere Tellerabschnitt (11) mit seiner zweiten Fläche (27) auf der zweiten Auflagefläche (24) aufliegt und vollständig in die eingefahrene Stellung (A) geschoben ist,
mittels der Längsbewegung (y) verschiebbar ist, wobei die Zwischenstellung (I) zwischen der Geschlossenstellung (C) und der Initialisierungsstellung (N) liegt.

9. Ventil nach Anspruch 8,
**gekennzeichnet durch**
eine Steuerung (29), die derart ausgebildet ist und mit dem Antrieb (12) in derartiger Verbindung steht, dass der Ventilteller (8)
zum gasdichten Unterbrechen des Fliesswegs (F)
• mittels der Querbewegung (x) des Antriebs (12)
- von der Offenstellung (O)
- in die Zwischenstellung (I)
und
• mittels der Längsbewegung (y) des Antriebs (12)
- von der Zwischenstellung (I)
- in die Geschlossenstellung (C)
und zum vollständigen Öffnen des Fliesswegs (F)
• mittels der Längsbewegung (y) des Antriebs (12)
- von der Geschlossenstellung (C), in welcher sich der innere Tellerabschnitt (11) in einer beliebeigen Stellung zwischen der eingefahrenen Stellung (A) und der ausgefahrenen Stellung (B) befindet,
- über die Initialisierungsstellung (N) zum vollständigen Schieben des inneren Tellerabschnitts (11) in die eingefahrene Stellung (B)
- in der Zwischenstellung (I)
und
• mittels der Querbewegung (x) des Antriebs (12)
- von der Zwischenstellung (I)
- in die Offenstellung (O)
verstellbar ist.

10. Ventil nach einem der Ansprüche 1 bis 9,
**dadurch gekennzeichnet, dass**
die erste Dichtung (10) auf der ersten Aussenfläche (15) des äusseren Tellerabschnitts (9) zum Herstellen des radial dichtenden Kontakts mit der ersten Innenfläche (14) des Ventilsitzes (5) fixiert ist.

11. Ventil nach einem der Ansprüche 1 bis 10,
**dadurch gekennzeichnet, dass**
die zweite Dichtung (18)
• auf der zweiten Innenfläche (16) des äusseren Tellerabschnitts (9) zum Herstellen des radial dichtenden Kontakts mit der zweiten Aussenfläche (17) des inneren Tellerabschnitts (11) oder
• auf der zweiten Aussenfläche (17) des inneren Tellerabschnitts (11) zum Herstellen des radial dichtenden Kontakts mit der zweiten Innenfläche (16) des äusseren Tellerabschnitts (9)
fixiert ist.

12. Ventil nach einem der Ansprüche 1 bis 11,
**dadurch gekennzeichnet, dass**
der äussere Tellerabschnitt (9) mit dem mindestens einen Antrieb (12) über einen derart seitlich an dem äusseren Tellerabschnitt (9) angeordneten, sich senkrecht zur Öffnungsachse (4) erstreckenden Arm (28) verbunden ist, dass sich der Arm (28) in der Geschlossenstellung (C) ausserhalb des entlang der Öffnungsachse (4) geometrisch projizierten Öffnungsquerschnitts der ersten Öffnung (3) befindet.

13. Ventil nach einem der Ansprüche 1 bis 12,
**dadurch gekennzeichnet, dass**
• der äussere Tellerabschnitt (9) ringförmig ausgebildet ist,
• der innere Tellerabschnitt (11) die Form einer geschlossenen Kreisscheibe aufweist und
• die erste Innenfläche (14), die erste Aussenfläche (15), die zweite Innenfläche (16) und die zweite Aussenfläche (17) geometrische Kreiszylindermantelflächen sind.

14. Ventil nach einem der Ansprüche 1 bis 13,
**dadurch gekennzeichnet, dass**
• das Ventil als ein Pendelventil ausgebildet ist und
• der Antrieb (12) derart ausgebildet ist, dass der Ventilteller (8) mittels der Querbewegung (x) im Wesentlichen parallel über den Querschnitt der ersten Öffnung (3) und senkrecht zur Öffnungsachse (4) schwenkbar ist.
